# EUROPEAN PATENT SPECIFICATION

(11) **EP 1 833 034 B1**
(45) Date of publication and mention of the grant of the patent: **03.06.2015**
(21) Application number: 05819863.1
(22) Date of filing: 21.12.2005
(51) Int. Cl.: B42D 25/328, B42D 25/391, B42D 25/364

(54) **IDENTIFICATION MEDIUM, ARTICLE EQUIPPED WITH IDENTIFICATION MEDIUM**
IDENTIFIKATIONSMEDIUM, MIT IDENTIFIKATIONSMEDIUM AUSGESTATTETER ARTIKEL
MOYEN D'IDENTIFICATION, ARTICLE DOTE DU MOYEN D'IDENTIFICATION

(30) Priority: 24.12.2004 JP 2004374459
(43) Date of publication of application: 12.09.2007
(73) Proprietor: NHK Spring Co., Ltd., Yokohama-shi, Kanagawa 236-0004 (JP)
(72) Inventor: HOSHINO, Hidekazu, Kanagawa 236-0004 (JP); TAKEUCHI, Itsuo, Kanagawa 236-0004 (JP); SAKAUCHI, Tokio, Kanagawa 236-0004 (JP)
(74) Representative: Eisenführ Speiser
(86) International application number: PCT/JP2005/023496
(87) International publication number: WO 2006/068180

(56) References cited:
- EP-A2- 0 911 758
- WO-A1-00/13065
- WO-A1-00/13065
- WO-A1-2004/024439
- WO-A1-2004/024439
- WO-A1-2004/102234
- WO-A1-2004/102234
- JP-A- 4 144 796
- JP-A- 2003 145 965
- JP-A- 2003 145 965
- JP-A- 2003 326 823
- JP-A- 2003 326 823
- US-A1- 2002 081 400

## Description

### Technical Field

The present invention relates to an identification medium which is able to determine whether or not articles are authentic by using visual effects.

### Background Art

Counterfeits of articles (for example, counterfeits of goods, garments, identification cards, music software, supplies, and replacement parts), which are produced by copying the appearances of authentic articles, are being sold and are causing problems. Under these circumstances, in order to ensure security of articles and to maintain the worth of the brands of articles, techniques for verifying the authenticity of the articles are required.

A method in which printing is performed on an article for determining the authenticity by using special ink may be used as a technique for verifying the authenticity of articles. Moreover, a method in which a chip having special reflection characteristics is applied onto an article may be used. In the above method using the special ink printed on an article, for example, a predetermined character or a figure is printed on an article by using an ink, which is fluorescent under ultraviolet light, as the above ink. When ultraviolet light is irradiated on the article, the character or the figure becomes visible on the article, so that the authenticity of the article can be determined. For example, an ink having particles of a magnetic material or magnetized particles mixed therewith may be applied on an article, and the authenticity of the article can be verified by using magnetic sensors. In the above method using the chip having special reflection characteristics, a chip using optical characteristics of a cholesteric liquid crystal formed thereon is used. For example, this technique is disclosed in Japanese Unexamined Patent Application Publications Nos. S63-51193 and H4-144796. In addition, a seal having a function of hologram may be used.

JP 2003 326823 A and JP 2003 145965 A disclose identification mediums having layered structures combining displays from cholesteric liquid crystals and from ordinary ink.

WO 00/13065 A1 discloses an identification medium with layered structure of cholesteric liquid crystals formed with a hologram and EP 0 911 758 discloses two different cholesteric liquid crystal layers applied one over the other for mixing their colors.

### DISCLOSURE OF THE INVENTION

There are risks that an identification medium using a special ink or a cholesteric liquid crystal may be obtained or counterfeited. Specifically, counterfeiting techniques have become sophisticated recently, and it may be difficult to ensure the provision of the identifying function only by simple use of a special ink or a cholesteric liquid crystal. This case is applied to an identification medium using a hologram. Therefore, an object of the present invention is to provide an identifying method which cannot be easily counterfeited and which will provide a good identifying ability.

The present invention provides an identification medium provided with a layered structure comprising the features of claim 1. The layers comprises an ink displaying layer and a cholesteric liquid crystal layer formed with a hologram. The ink displaying layer shows a figure in which a first display caused by an ink including cholesteric liquid crystals and a second display caused by an ordinary ink are combined.

The first display is formed by painting or printing with an ink including cholesteric liquid crystals. The second display is formed by painting or printing with an ordinary ink. Generally, a figure is formed by combining the first display and the second display. For example, a design comprising letters in the first display and a background in the second display may be mentioned.

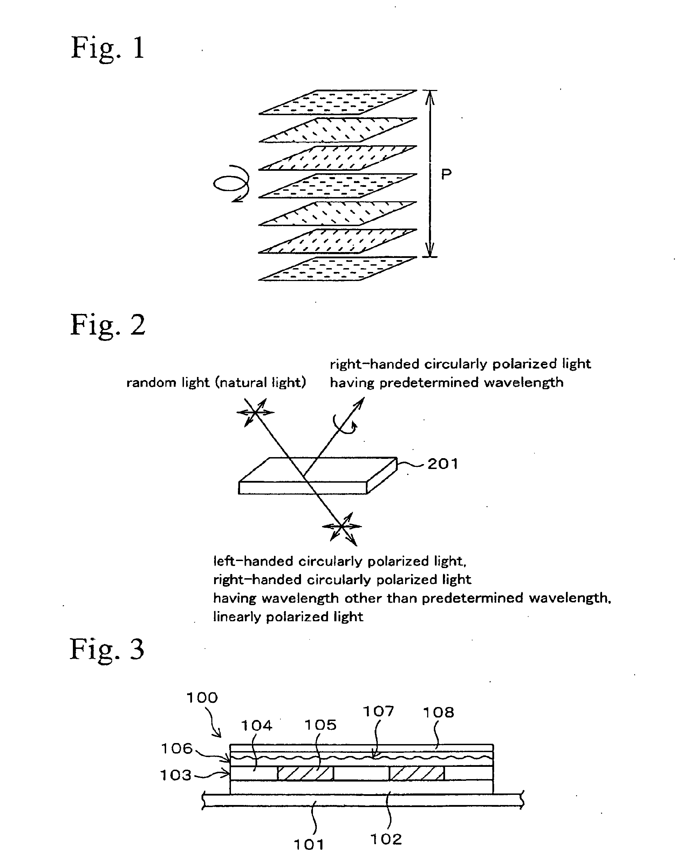

The cholesteric liquid crystal layer formed with a hologram has a fine asperity made by stamping on the cholesteric liquid crystal layer, and comprises a structure in which a predetermined figure emerges by an effect of the hologram. The cholesteric liquid crystal layer is explained hereinafter. Fig. 1 shows a schematic structure of a cholesteric liquid crystal layer, and Fig. 2 is a schematic view for explaining optical characteristics of a cholesteric liquid crystal layer. Fig. 2 shows a condition in which a right-handed circularly polarized light having a predetermined wavelength is reflected, and a left-handed circularly polarized light, a linearly polarized light, and right-handed circularly polarized light having other wavelengths are transmitted through a cholesteric liquid crystal layer 201, when natural light enters into the layer.

The cholesteric liquid crystal layer has a stacked structure. In one layer, long axes of liquid crystal molecules have the same orientation and are parallel to the plane thereof in a layer. The directions of the orientation slightly differ with respect to the adjacent layer, and the layers are stacked with the orientations rotated in a three-dimensional spiral structure overall. In this structure, in a direction perpendicular to the layer, pitch P is a distance necessary for the molecular long axis to be rotated through 360° and return to the initial state, and an average refraction index of the respective layers is index n. In this case, the cholesteric liquid crystal layer selectively reflects circularly polarized light having a predetermined rotation direction and a center wavelength λs which satisfies the equation λs = n × P. That is, when white light enters into the cholesteric liquid crystal layer, a right-handed or left-handed circularly polarized light having a predetermined center wavelength is selectively reflected. In this case, circularly polarized light having the same rotation direction as the reflected circularly polarized light but not having the wavelength of λs, a circularly polarized light having a reverse rotation direction to the reflected circularly polarized light, and a linearly polarized light are transmitted through the cholesteric liquid crystal layer.

The rotation direction (rotating direction) of the reflected circularly polarized light is determined by selecting a spiral direction of the cholesteric liquid crystal layer. That is, when the long axes are seen from the incident direction of the light, by selecting either the spiral direction in which the molecular long axis of each layer orientation is clockwise or counterclockwise, the rotation direction (rotating direction) of the reflected circularly polarized light is determined.

The cholesteric liquid crystal layer exhibits an optical characteristic called "color shifting" in which color varies with viewing angle. This is because the pitch P apparently decreases when the viewing angle increases, and the center wavelength λs shifts toward a shorter wavelength. For example, when a cholesteric liquid crystal is observed from a vertical direction, the reflected color thereof is red, and it is observed to shift to orange, yellow, green, blue-green, and blue in turn as the viewing angle increases. It should be noted that the viewing angle is defined as the angle formed by a visual line and a vertical line against the surface of the identification medium. In the cholesteric liquid crystal layer formed with a hologram, a figure of the hologram is observed accompanied with these basic optical characteristics of the cholesteric liquid crystal layer.

An ink including cholesteric liquid crystals is defined as an ink in which a cholesteric liquid crystal layer shown in Fig. 1 is cut into scale-like pieces and is dispersed in a vehicle of an ordinary ink. An ordinary ink is defined as an ink for printing. When an ink layer is formed on a surface of a substrate with the ink including the cholesteric liquid crystals by printing or coating, scale-like cholesteric liquid crystals are distributed in layers, and the ink layer exhibits a function as a cholesteric liquid crystal layer. A layer exhibiting a function of a cholesteric liquid crystal layer is printed by using the ink including the cholesteric liquid crystals. As an ink including cholesteric liquid crystals, a pigment of cholesteric polymer liquid crystal which has the above structure and is dispersed in a commercial ink binder may be used. As a pigment of cholesteric polymer liquid crystal available for the application, a pigment produced by Wacker Chemie GmbH may be mentioned.

According to the present invention, for example, an identification medium is provided in which a separator (exfoliate paper), a black adhesive layer (light absorption layer), an ink displaying layer, and a cholesteric liquid crystal layer are laminated, in that order. The identification medium may be fixed on an appropriate article for determining authenticity by exfoliating the separator and using the exposed adhesive layer. When the identification medium is viewed from the side of the cholesteric liquid crystal, optical characteristics of the cholesteric liquid crystal layer and the ink layer are combined together, whereby specific views having good identifying ability may be observed.

In the present invention, when the identification medium is viewed from a predetermined viewing angle, a first display and a second display are preferably set to have the same color. For example, a case in which the first display and the second display are set to have the same color at viewing angle 0° is exemplified. In this case, when the identification medium is viewed from the side of the cholesteric liquid crystal layer at viewing angle 0° (that is, the identification medium is vertically viewed from the front side), a hologram formed on the top cholesteric liquid crystal layer is clearly recognizable, but a figure formed on the bottom ink layer is not easy to observe nor is it easily recognizable. Because the first display and the second display composing the ink layer are set to have the same color at viewing angle 0°, the figure comprised of the first display and the second display is difficult to recognize.

When the viewing angle is gradually increased, the hologram of the cholesteric liquid crystal layer remains visible with the color shifting, and the first display (or the second display) of the ink layer emerges. Because the second display does not exhibit color shifting while the first display appears in the ink layer, the differentiation between the first display and the second display is easy by color shifting which occurrs in accordance with the increase in the viewing angle. Thus, according to the increase in the viewing angle, a figure consisting of the first display (or the second display) emerges while the figure of the hologram is observed.

When the identification medium is viewed through a polarized filter which selectively transmits a circularly polarized light having a predetermined rotation direction, a more specific optical character may be observed. For, example, a cholesteric liquid crystal layer and a cholesteric liquid crystal in ink composing the first display of the ink layer selectively reflect right-handed circularly polarized light. In this case, when the identification medium is viewed through a polarized filter which selectively transmits right-handed circularly polarized light, the observation result may be the same as that viewed by the naked eye while the brightness is decreased. When the identification medium is viewed through a polarized filter which selectively transmits left-handed circularly polarized light, a reflection of right-handed circularly polarized light of a cholesteric liquid crystal layer and the first display of an ink layer are cut off, whereby the hologram of the cholesteric liquid crystal layer and the first display cannot be seen (or is difficult to see). The second display of the ink layer is made from an ordinary ink, whereby the reflected light can be observed. Therefore, a figure in which the first display of the ink layer is black is observed. Thus, a more specific optical character is obtained by using the polarized filter. This specific view is effective for maintaining good identifying function.

The identification medium of the present invention preferably comprises a light absorption layer which is comprised of a thermosensitive ink. The thermosensitive ink is an ink which changes colors by heating or cooling. For example, in the present invention, a light absorption layer is comprised of an ink which is black at an ordinary temperature and changes to the other color or a transparent state by heating. In this case, besides the above optical character, the function of the light absorption layer disappears and a view of a hologram and a figure of the ink layer are changed by heating. Accordingly, an identifying function having more complicated appearance is obtained.

The present invention may be explained as an article provided with the above identification medium. Passports, bonds, important documents, various types of cards, gift certificates, clothing items, commodities, storage media, electric appliances, machine components, electronic components, and various other products may be mentioned as articles. In addition, a package and a packing material of these articles may be mentioned as an article. Moreover, tags and price tags of products may be comprised of the identification medium of the present invention.

An identifying method of the identification medium may be explained as follows. That is, the identifying method comprises a first observing step for observing the identification medium through a polarized filter which selectively transmits circularly polarized light having a predetermined rotation direction, and a second observing step for observing the identification medium without using the polarized filter.

It should be noted that the order of the first observing step and the second observing step may be reversed. In the second observing step, a polarized filter other than the polarized filter used in the first observing step may be used. The second observing step may be performed without the polarized filter. The observation may be performed by using a camera or an optical sensor. Moreover, the observation may not always be performed by image recognition. For example, a color detection method or a spectrum evaluation method may be used as an observing method.

As hardware used for performing the above identifying method, an identifying apparatus may be mentioned. The identifying apparatus comprises a first observing device for observing the identification medium through a polarized filter which selectively transmits circularly polarized light having a predetermined rotation direction, and a second observing device for observing the identification medium without using the polarized filter.

In the identification medium of the present invention, a barcode may be applied as the figure of the ink displaying layer. In this case, an identification medium in which the barcode is difficult to read under ordinary conditions, but can be read under predetermined conditions, is obtained.

The present invention enables an identifying method which cannot be easily counterfeited and which will provide a good identifying ability That is, according to the present invention, an effect performed by combining an identifying ability of a cholesteric liquid crystal layer and an identifying ability of a figure formed by an ordinary ink and an ink including cholesteric liquid crystals is obtained. An identification medium having a specific view and a high identifying ability is obtained by the effect. The specific view is complicated because of the effect, and is not easily reproduced, whereby counterfeiting is difficult. Therefore, an identifying method which will provide a good identifying ability and which cannot be easily counterfeited is provided.

### BRIEF DISCRIPTION OF DRAWINGS

Fig. 1 is a schematic view for explaining optical characteristics of a cholesteric liquid crystal layer.
Fig. 2 is a schematic view for explaining optical characteristics of a cholesteric liquid crystal layer.
Fig. 3 is a cross section showing an outline of an identification medium using the present invention.
Fig. 4 is a schematic view for explaining a visual effect of an identification medium using the present invention.
Fig. 5 is a schematic view for explaining a visual effect of an identification medium using the present invention.
Fig. 6 is a schematic view for explaining a visual effect of an identification medium using the present invention.
Fig. 7 is a cross section showing an outline of the identification medium using the present invention.
Fig. 8 is a schematic view showing an example of an apparatus for determining the authenticity of an identification medium using the present invention.

### EXPLANATION OF REFERENCE NUMERALS

100 denotes an identification medium, 101 denotes a separator, 102 denotes an adhesive layer (or thermosensitive setting adhesive layer), 103 denotes an ink displaying layer, 104 denotes a printed layer including cholesteric liquid crystals, 105 denotes a printed layer with an ordinary ink, 106 denotes a cholesteric liquid crystal layer, 107 denotes a hologram, 108 denotes a transparent protective layer, 109 denotes a figure formed by the ink displaying layer, 110 denotes a display printed on a surface of an article to which an identification medium is fixed, 201 denotes a cholesteric liquid crystal layer, 701 denotes an identification medium, 702 denotes a multilayer film layer, 703 denotes a hologram formed on the multilayer film layer, 801 denotes an apparatus for determining authenticity, 802 denotes a stage, 803 denotes an article for determining authenticity, 804 denotes an apparatus which emits visible light, 805 denotes a camera, 806 denotes a polarized filter, 807 denotes a determining section, 808 denotes a memory, and 809 denotes an output section.

### BEST MODE FOR CARRYING OUT THE INVENTION

### 1. First Embodiment

### 1-1 Outline of Embodiment

Fig. 3 is a cross section showing a cross sectional structure of an identification medium using the present invention. The identification medium 100 shown in Fig. 3 is fixed on a separator (exfoliate paper) 101, and comprises an adhesive layer 102, an ink displaying layer103, a cholesteric liquid crystal layer 106, and a transparent protective layer 108.

The separator (exfoliate paper) 101 protects the adhesive surface of the adhesive layer 102, and is exfoliative therefrom. When the identification medium 100 is fixed on an optional article, the separator 101 is exfoliated and the adhesive surface is pressed onto the article. The adhesive layer 102 has a function of fixing the identification medium 100 to the surface of an appropriate article. Black pigments or colorants are dispersed in the adhesive layer 102, whereby the adhesive layer 102 functions as a light absorption layer which absorbs visible light.

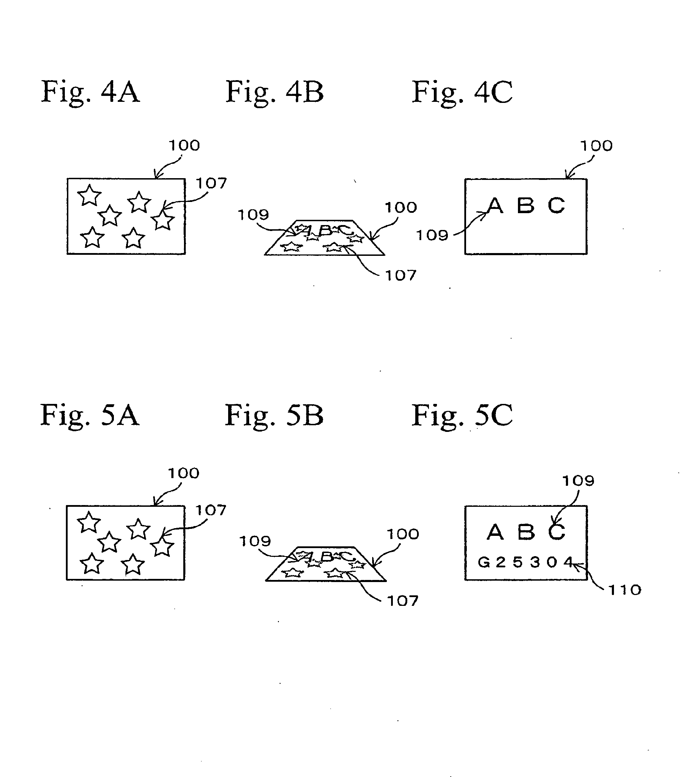

The ink displaying layer 103 has a structure that comprises a printed layer 104 made from an ink including cholesteric liquid crystals and a printed layer 105 made from an ordinary ink. An optional figure is formed by combining the printed layer 104 and 105. In this example, a predetermined figure of characters (a logo design indicated by numeral 109 in Fig. 4B) is formed by the printed layer 105. A two-layer structure is applied as the ink displaying layer 103. In this case, the printed layer 104 made from an ink including cholesteric liquid crystals is formed all over the adhesive layer 102, and the printed layer is printed thereon with an ordinary ink to form a two-layer structure. The ordinary ink is formed into a predetermined figure indicated by numeral 109. In this case, the same identifying ability as that of the above structure is obtained.

In this example, when the identification medium 100 is viewed from the front side, an ink in which reflected light from the cholesteric liquid crystal included in the printed layer 104 appears green is selected as an ink for printing the printed layer 104. A material by which the reflected light from the printed layer 104 is right-handed circularly polarized light is selected. Moreover, when the identification medium 100 is viewed from the front side, an ink for the printed layer 105 is selected to exhibit the same color (in this case, the color is green) as the printed layer 104.

A cholesteric liquid crystal layer 106 is set to show a green color by the state of orientation, when the cholesteric liquid crystal layer 106 is viewed from the front side. The cholesteric liquid crystal layer 106 is set to selectively reflect the right-handed circularly polarized light, which is the same as the cholesteric liquid crystals included in the printed layer 104. The cholesteric liquid crystal is formed by embossing (processing applying asperity) to form a hologram 107. A predetermined figure is observed by this hologram 107.

A transparent protective layer 108 is a transparent polymer film, and in this example, TAC (triacetylcellulose) is applied. The transparent protective layer 108 is preferably made from a material which has no effect or a small effect on the polarized state of transmitted light.

### 1-2 Display Example of Embodiment

An example of a display of the identification medium 100 shown in Fig. 3 is explained hereinafter. Fig. 4 is a schematic view for explaining a visual effect of an identification medium 100. Fig. 4A shows a condition in which the identification medium 100 is viewed from the front side, Fig. 4B shows a condition in which the identification medium 100 is tilted, and Fig. 4C shows a condition in which the identification medium 100 is viewed through a polarized filter.

In the embodiment, when the identification medium 100 is viewed from the front side (viewing angle 0°), the entire surface of the ink displaying layer 103 appears green. Therefore, when the identification medium 100 is viewed from the front side, the printed layer 104 and 105 are difficult to distinguish, and the display formed on the ink displaying layer 103 is difficult to recognize. Thus, when the identification medium 100 is viewed from the front side, the figure of the hologram 107 is preferentially observed. One example of this condition is shown in Fig. 4A. Fig. 4A shows an example in which a figure of stars is formed as a hologram 107. In this case, the hologram 107 appears green with a metallic luster. That is, when the identification medium 100 is viewed from the front side (viewing angle 0°), the entire surface of the ink displaying layer 103 is green, whereby the display on the ink displaying layer 103 is difficult to recognize, and only the hologram 107 is recognizable (the condition shown in Fig. 4A).

A case in which the identification medium 100 is tilted and observed is explained. In this case, the viewing angle is, for example, 30° or 45°. Therefore, the cholesteric liquid crystals included in the printed layer 104 exhibit color shifting. Thus, the printed layer 104 changes color from a green to a bluish color. A green figure consisting of the printed layer 105 emerges in a background which exhibits color shifting. Fig. 4B shows an example in which a green figure (logo) 109, which is shown as "A B C" by the printed layer 105, is formed.

In this case, a hologram 107 is also observed in addition to the figure 109. Therefore, when the identification medium 100 is tilted after being observed from the front side, the figure 109 gradually emerges, while only the hologram 107 is observed at first. In this case, the cholesteric liquid crystal layer 106 exhibits color shifting according to the change of the viewing angle, and the condition of reflection and refraction of the hologram 107 changes. Therefore, a change of luster of the hologram which is already viewed is observed in addition to the emergence of the figure 109. Thus, when the identification medium is tilted, the appearance of the figure which is already displayed changes, and a hidden display emerges exhibiting changes of specific colors. Accordingly, an optical function by which a specific view is observed is obtained.

Another optical function may be obtained by observing through a polarized filter. For example, the identification medium 100 is observed through a polarized filter (viewer) that transmits left-handed circularly polarized light and does not transmit right-handed circularly polarized light. In this case, the hologram 107 is difficult to observe, and a figure of the printed layer 105 consisting of an ordinary ink emerges in green in the black (or dark) background. That is, when the identification medium 100 is observed through the above polarized filter, right-handed circularly polarized light which is selectively reflected from the cholesteric liquid crystal layer 106 is cut off by the polarized filter, whereby the hologram 106 is barely observed. Moreover, right-handed circularly polarized light from the cholesteric liquid crystals included in the printed layer 104 is cut off by the above polarized filter. On the other hand, reflected light in green from the printed layer 105, which is formed by an ordinary ink, is decreased, but a part thereof is transmitted through the above polarized filter. Therefore, the reflected light is recognizable. Accordingly, the figure 109 is observed in green in the black background. Thus, the identification medium 100 is observed through a polarized filter (viewer), which selectively transmits left-handed circularly polarized light and does not transmit right-handed circularly polarized light, the hologram 107 which shows a figure of stars is not observed (or is difficult to observe), and the figure 109 of the ink displaying layer 103 formed by printing with an ordinary ink is selectively observed (Fig. 4C).

### 1-3 Manufacturing Example of Embodiment

An example of a manufacturing method for the identification medium 100 shown in Fig. 3 is explained hereinafter. First, a method for forming the cholesteric liquid crystal layer 106 is explained. A low-molecular cholesteric liquid crystal is dissolved in a polymerizable monomer and temperature conditions are controlled so that cholesteric liquid crystals grow. After that, the low-molecular weight liquid crystals are cross-linked by light reactions or thermal reactions, so that the molecular orientation thereof is fixed and polymerized. As a result, a raw liquid of cholesteric liquid crystal is obtained. The raw liquid is applied to one side of a transparent protective layer (TAC film which is 40 µm thick) 108, which is a substrate having a predetermined thickness, and cholesteric orientation and molecular orientation thereof are fixed. In this case, the cholesteric liquid crystal has a uniform torsion pitch P along a molecular layered direction thereof, and has a layered thickness of 1 µm. The cholesteric liquid crystal preferably has a thickness of about 0.5 µm to 5.0 µm. In the embodiment, the direction of torsion of liquid crystal molecules and pitch P are adjusted in order to selectively reflect the right-handed circularly polarized light, and a green color is simultaneously observed at the viewing angle 0°. Thus, a cholesteric liquid crystal layer 106 is formed on one side of the transparent protective layer 108.

As a method for obtaining a raw liquid of cholesteric liquid crystal, a thermotropic polymer liquid crystal of the branched-chain type or the straight-chain type may be heated to a temperature of the liquid crystal transition point thereof or higher, so that a cholesteric liquid crystal structure thereof grows, and then may be cooled to a temperature of the liquid crystal transition point or lower, so that the molecular orientation thereof is fixed. Alternatively, lyotropic polymer liquid crystal of branched-type or straight-type may be oriented in a cholesteric orientation in a solvent, and the solvent may be gradually volatilized, so that the molecular orientation thereof is fixed.

As raw materials for the above materials, a branched-chain type polymer having a liquid crystal forming group in a branched-chain, for example, polyacrylate, polymethacrylate, polysiloxane, or polymalonate may be used. Alternatively, a straight-chain type polymer having a liquid crystal forming group in a straight chain, for example, polyester, polyester amide, polycarbonate, polyamide, or polyimide, may be used.

The cholesteric liquid crystal layer 106 is embossed, so that a hologram 107 is formed. In this process, a structure with a microasperity is applied to the stacked structure of the cholesteric liquid crystal layer 106, so that a hologram 107 is formed. An ink displaying layer 103 is formed by printing on an exposed surface of the cholesteric liquid crystal layer 106. In this case, a printed layer 104 is formed by printing with an ink including cholesteric liquid crystals, and a printed layer 105 is formed by printing with an ordinary ink. As an ink including cholesteric liquid crystals, an ink, which is made by dispersing pigments of cholesteric polymer liquid crystal produced by Wacker Chemie GmbH in a commercial ink binder, is applied.

After an ink displaying layer 103 is formed, the exposed surface thereof is coated with an adhesive, so that an adhesive layer 102 is formed. The adhesive layer 102 has a thickness of 20 µm, for example. After the adhesive layer 102 is formed, a separator 101 is laminated on the exposed surface thereof. Thus, a separator 101, an adhesive layer 102, an ink displaying layer 103, a cholesteric liquid crystal layer 106, and a transparent protective layer 108 are laminated, in order, from below. An identification medium 100 having a separator laminated on an adhesive face is obtained by cutting off the stacked structure. Moreover, a separator 101, on which plural identification medium 100 are laminated, is obtained by partially removing the stacked structures other than the separator 101.

In the first embodiment, a character may be formed by the printed layer 104, and the printed layer 105 may be used as a background. In this case, a part of the character exhibits color shifting, and the background appears green and does not change. Moreover, when the identification medium is observed through an optical filter which selectively transmits left-handed polarized light, a part of the character appears black in the green background.

### 2. Second Embodiment

When the identification medium is viewed from the front side, an ink displaying layer may be set to have a color which is different from a color of a cholesteric liquid crystal layer. For example, in the first embodiment, a cholesteric liquid crystal included in the printed layer 104 is set to reflect right-handed circularly polarized light which appears red, when the cholesteric liquid crystal is viewed from the front side. Moreover, an ordinary ink included in the printed layer 105 is set to be red, which is the same color as the above. In this case, when the identification medium 100 is viewed from the front side of a transparent protective layer 108, a hologram 106 appears orange with a metallic luster. The green color of the cholesteric liquid crystal 106 and the red color of the ink displaying layer 103 are simultaneously observed, whereby a mixed color thereof is observed, and the orange color is obtained.

When the identification medium is viewed from the front side, the printed layer 104 and the printed layer 105 are not distinguishable (or are difficult to distinguish), whereby a display of the ink displaying layer 103 (a logo design "A B C") is difficult to recognize. That is, star marks formed by a hologram 107 are preferentially observed.

The cholesteric liquid crystal layer 106 and the printed layer 104 including cholesteric liquid crystals exhibit color shifting by tilting the identification medium 100. In this case, the printed layer 105 including an ordinary ink continuously appears red, and the other exhibits color shifting, whereby the color changes toward a bluish state. As a result, a logo design "A B C" formed by the printed layer 105 is distinctly observed to be red in accordance with the color change.

In the embodiment, two-color shifting, which appears to be overlapping, have different spectrums, whereby the color change is not simple, but is instead sophisticated and specific in accordance with change in the viewing angle. Therefore, an identification medium having superior identifying ability and superior anticounterfeiting effects is obtained.

### 3. Third Embodiment

For example, in the first embodiment, the adhesive layer 102 may be formed to have light transparency without adding pigments, and a thermosensitive ink layer may be formed between the light transparent adhesive layer 102 and an ink displaying layer 103. The thermosensitive ink layer is an ink (thermosensitive ink) layer which changes color and light transparency state by heating or cooling. The thermosensitive ink may also be called a thermochromic ink.

An example in which a thermosensitive ink layer is provided between a light transparent adhesive layer 102 and an ink displaying layer 103 is explained hereinafter. The thermosensitive ink layer comprises a thermosensitive ink which is black at an ordinary temperature and changes to a transparent state at 60 °C or higher. For example, an identification medium 100 is fixed on a package of an electron storage medium that stores a predetermined application software. In this case, an individual identification number such as a serial number is printed on a place to fix the identification medium 100.

The above structure shows the same function as the identification medium 100 which is explained in the first embodiment at an ordinary temperature. When the identification medium 100 is heated to 60 °C or higher, the thermosensitive ink layer without a figure is in a transparent state, and the individual identification number thereunder can be recognized. A hologram 107 and a figure formed by a printed layer 105 may be slightly visible as long as the individual identification number is observed. That is, an effect of color shifting of the cholesteric liquid crystal is possible.

A specific example is explained as follows. Fig. 5 is a schematic view for explaining the other appearance of an identification medium 100. An example of an appearance of the identification medium 100 which is fixed on the package of the above article is explained. Fig. 5A shows an appearance of the identification medium 100 which is observed from the front side, Fig. 5B shows an appearance of the identification medium 100 which is tilted, and Fig. 5C shows an appearance of the identification medium 100 which is observed through a polarized filter during heating.

When the identification medium 100 is observed from the front side at an ordinary temperature (for example, at 20 °C), a hologram 107 is preferentially observed as in the case of Fig. 4 (Fig. 5A). In this case, when the identification medium 100 is observed tilted, color shifting of a printed layer 104 is performed, and the color state thereof is changed, whereby a figure 109 emerges in addition to the hologram 107 (Fig. 5B).

An identification medium 100 is heated to 70 °C, and it is observed through a polarized filter which selectively transmits left-handed circularly polarized light. In this case, reflected light from a cholesteric liquid crystal layer 106 and reflected light from the printed layer 104 are cut off by the polarized filter and are invisible. The thermosensitive ink layer without a figure is heated to 70 °C, thereby changing into a transparent state. Reflected light of a printed layer 105 and reflected light the base (a surface of the article) are partially transmitted through the polarized filter, and are recognizable. That is, a figure 109 and an individual identification number 110 which is printed on the base are recognizable (Fig. 5C). Moreover, a thermosensitive ink having reversibility may be applied. In this case, when the identification medium 100 is cooled to an ordinary temperature from a heated state, the thermosensitive ink layer turns black, and the individual identification number 110 is invisible.

As a thermochromic material which becomes transparent by heating, microencapsulated pigments may be used. The pigment is composed of a film containing a photopolymerizable composition and an aliphatic amine or an aromatic amine, and the film includes reversible heat allochroic compositions and is ionized by an acid material. This thermochromic material can be made to appear to be black or a dark color, which functions as a light absorption layer at room temperature, and becomes transparent by heating, by appropriately selecting components. As an available thermochromic material, a thermochromic ink (trade name: DynaColor, produced by Chromatic Technologies, Inc., United States) may be used.

As a method of heating a thermochromic material, dryers (for exposure to hot air), heating lamps, heaters, frictional heating, contacting with hot liquids, contacting with high temperature articles, and heating directly or indirectly by appropriate heating elements may be mentioned. As a method of heating by friction, a method in which heat is generated by rubbing with a hand may be mentioned.

The above example is a case of using a thermosensitive ink, but an ink (photochromic ink) comprising a photochromic material which changes color and a transparent state by light irradiation may be used. In this case, for example, a thermosensitive ink layer is changed from black to a light transparent state by ultraviolet irradiation. A photochromic material has a property in which color is changed, not by heat, but by light (for example, ultraviolet light). A photochromic material is similar to the thermochromic material except that light is used to change the optical characteristics thereof. A photochromic material is generally made from a material which is photoisomerized by light. As the photochromic material, azoic dyes, Schiff chlorine materials, and O-nitrobenzene materials may be mentioned. As an available photochromic material, a photochromic ink (trade name: DynaColor, produced by Chromatic Technologies, Inc., United States) may be used.

### 4. Fourth Embodiment

In the structure shown in Fig. 3, a rotation direction of reflected light from the cholesteric liquid crystal layer 106 may be set in a direction opposite to a rotation direction of reflected light from the printed layer 104. That is, the rotation direction of reflected light from the upper cholesteric liquid crystal layer may be set in a direction opposite to the rotation direction of reflected light from the lower printed layer formed by an ink which includes cholesteric liquid crystals. For example, in the structure shown in Fig. 3, the reflected light from the cholesteric liquid crystal layer 106 is set to be right-handed circularly polarized light in red, and the reflected light from the cholesteric liquid crystal included in the printed layer 104 is set to be left-handed circularly polarized light in red. Moreover, the printed layer 105 formed by an ordinary ink is set to be red.

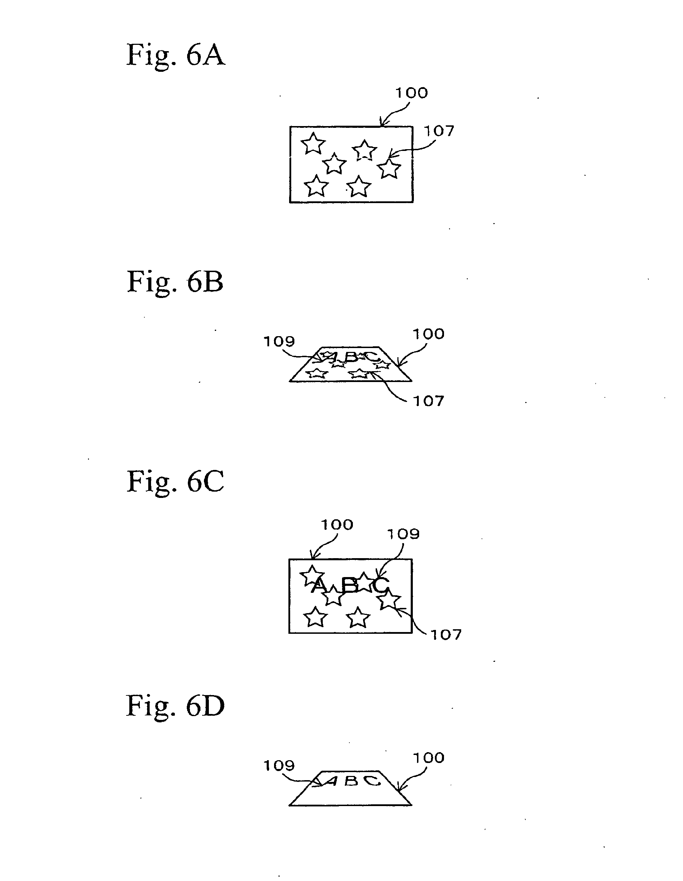

Fig. 6 is a schematic view for showing another appearance of the identification medium of the embodiment. In this case, when the identification medium is viewed from the front side, a hologram 107 with a metallic luster is distinctly observed as shown in Fig. 6A. Because the overall surface of the ink displaying layer 103 appears red, and the printed layer 104 and 105 are difficult to distinguish, the figure 109 is difficult to observe.

When the identification medium 100 is tilted, the printed layer 104 exhibits color shifting, and it is easy to distinguish from the printed layer 105, whereby the figure 109 emerges (Fig. 6B). Then, when the identification medium 100 is observed through a polarized filter which selectively transmits right-handed circularly polarized light, the hologram 107 and the figure 109 are observed (Fig. 6C). The reflected light from the cholesteric liquid crystal layer 106 (refer to Fig. 3) is observed because the polarized filter selectively transmits right-handed circularly polarized light, whereby the hologram 107 is visible. Moreover, the reflected light from the background of the figure 109 (the reflected light from the printed layer 104) is not transmitted through the above polarized filter, but the reflected light from the figure 109 (the reflected light from the printed layer 105) is partially transmitted through the above filter, whereby the figure 109 is recognized as being red.

When the identification medium 100 of the embodiment is observed through a polarized filter which selectively transmits left-handed circularly polarized light, the overall surface thereof appears red, and the hologram 107 and the figure 109 are invisible. This is due to the following. The right-handed circularly polarized light reflected from the hologram 107 is cut off by the polarized filter, and cannot be recognized. Moreover, the left-handed circularly polarized light reflected from the cholesteric liquid crystal included in the printed layer 104 is transmitted through the optical filter, but the color thereof is the same as that of the printed layer 105 made from an ordinary ink. Therefore, the figure 109 formed by the printed layer 105 cannot be recognized (or is difficult to recognize).

However, when the identification medium is observed tilted through the above optical filter which selectively transmits left-handed circularly polarized light, the figure 109 emerges in accordance with the increase in the viewing angle (Fig. 6D). This is due to the following. That is, the reflected light from the cholesteric liquid crystal 106 (right-handed circularly polarized light) is cut off by the optical filter, whereby the color shifting cannot be observed even though the identification medium is tilted. As a result, the hologram 107 cannot be observed. On the other hand, when the identification medium 100 is observed tilted through the above optical filter, the printed layer 104 exhibits color shifting, but the printed layer 105 does not exhibit color shifting. Therefore, while the printed layer 104 shifts colors to yellow, green and blue in turn, the printed layer 105 continuously appears red, whereby the figure 109 formed by the printed layer 105 is distinguished. Thus, when the identification medium 100 is observed tilted through the optical filter which selectively transmits left-handed circularly polarized light, the figure 109 emerges in accordance with the increase in the viewing angle (Fig. 6D). In this way, the rotation direction of the reflected light from the upper cholesteric liquid crystal layer is set in a direction opposite to the rotation direction of the reflected light from the lower printed layer formed by an ink which includes cholesteric liquid crystals, whereby a specific identifying ability is obtained in observation through an optical filter.

### 5. Fifth Embodiment

A thermosensitive ink or a photochromic ink may be applied to the ink displaying layer. For example, as an ink which forms a printed layer 104, a thermosensitive ink or a photochromic ink in which cholesteric liquid crystals are dispersed may be applied. Moreover, as an embodiment not forming part of the invention, the thermosensitive ink or the photochromic ink may be applied instead of an ordinary ink which forms a printed layer 105. In this case, the light transmission rate and the color of the printed layer 105 are changed by thermal change or light irradiation. The identifying ability and anticounterfeiting effects are further improved by combining these phenomena.

### 6. Sixth Embodiment

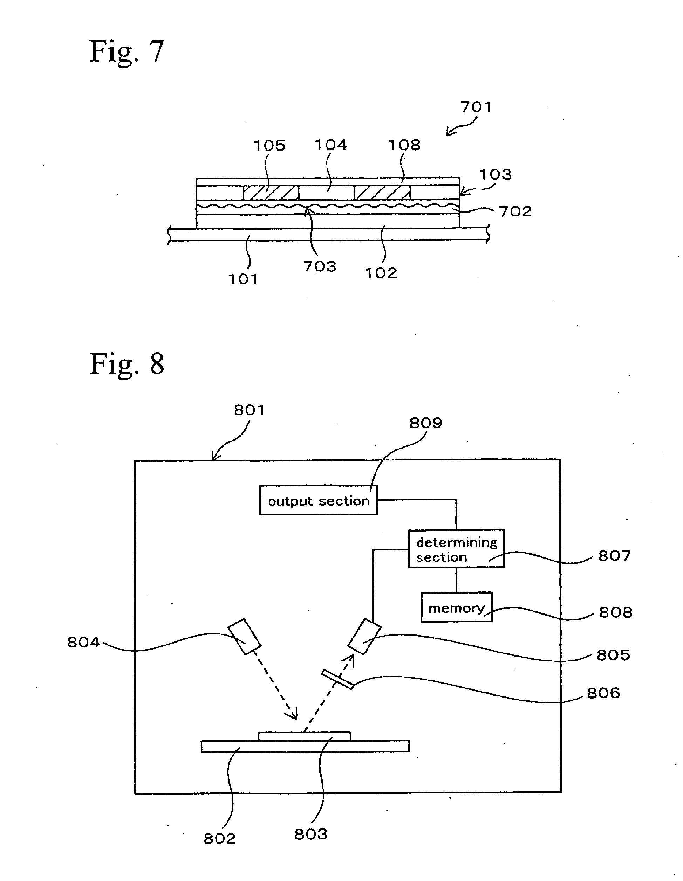

An ink displaying layer and a multilayer film layer may be laminated, in order, from the observing side, as an embodiment not forming part of the invention. An example of the structure is explained hereinafter. Fig. 7 is a cross section showing another example of the identification medium. The identification medium 701 shown in Fig. 7 is fixed on the separator (exfoliate paper) 101, and comprises an adhesive layer 102, a multilayer film layer 702, an ink displaying layer 103, and a transparent protective layer 108. It should be noted that portions indicated by the same numerals as those shown in Fig. 3 are the same as those explained for Fig. 3. The multilayer film layer 702 is formed with a hologram 703.

The multilayer film layer is formed by laminating plural light transparent films having different refractive indexes. An interface between thin films having different refractive indexes partially reflects an incident light. The multilayer film layer has numerous interfaces, and the reflected light of each interface interferes with that of others. When the multilayer film layer is tilted and the viewing angle is increased, an optical path difference of the reflected light of each interface is short, and the light of shorter wavelengths interferes and is reinforced. Therefore, the light of shorter wavelengths is distinctly observed as a reflected light in accordance with the increase in the viewing angle. For example, when the multilayer film layer is tilted, the color of the interfered light shifts toward shorter wavelength from red to blue through yellow and green in turn. That is, the multilayer film layer exhibits color shifting similar to that shown by the above cholesteric liquid crystal layer.

For example, the multilayer film layer 702 is formed by alternately laminating at least several dozen layers which have two kinds of light transparent films having different refractive indexes. In the multilayer film layer, it is important that the light transparent films laminated adjacent to each other have different refractive indexes because the reflected light of the interface of the laminated structure is used. As a structure of the multilayer film layer, when one unit is formed by laminating three or more kinds of light transparent films having different refractive indexes, in order, a structure formed by laminating plural units may be mentioned.

As a specific example of the multilayer film layer 702, a structure (20 µm thick) in which 201 layers are alternately laminated by first films consisting of polyethylene-2,6-naphthalate and second films consisting of polyethylene terephthalate may be mentioned. The hologram 703 is formed by embossing the laminated structure.

### 7. Seventh Embodiment

As an embodiment not forming part of the invention, a multilayer film layer formed by laminating plural light transparent films having different refractive indexes may be applied instead of the cholesteric liquid crystal. For example, in a structure shown in Fig. 3, a multilayer film layer may be applied instead of the cholesteric liquid crystal layer 106. In this structure, the multilayer film layer is preferably formed with a hologram.

### 8. Eighth Embodiment

An identification medium comprising a basic structure shown in Fig. 3 may be fixed on an appropriate article by a transfer method. In this case, an exfoliate sheet of which adhesive strength is decreased by heating, a transparent protective film 108, a cholesteric liquid crystal layer 106, an ink displaying layer 103, and a thermosetting adhesive layer which exhibits bonding strength by heating instead of an adhesive layer 102, are laminated, in order, from below. The thermosetting adhesive layer is pressed onto a surface of an appropriate article, and it is heated from the side of the exfoliate layer by a hot press, so that the thermosetting adhesive layer is fixed on the article. In this case, the adhesive strength of the exfoliate sheet is decreased, and the transparent protective layer 108 is exfoliated therefrom. Thus, the identification medium having the basic structure shown in Fig. 3 is fixed on an appropriate article by transfer printing.

### 9. Ninth Embodiment

In the identification medium of the present invention, besides identifying methods performed by observing through a polarized filter or by observing with irradiation of polarized light, identification may be automatically performed by image recognition. Fig. 8 is a schematic view showing an example of an apparatus for determining authenticity of the identification medium of the present invention. In Fig. 8, the apparatus includes a device for determining the authenticity 801, a stage 802, an article for determining the authenticity 803, a device for irradiating visible light 804, a camera 805, a polarized filter 806, a determining section 807, a memory 808, and an output section 809.

The stage 802 is provided for setting thereon the article for determining the authenticity 803. For example, the article for determining the authenticity 803 comprises a cross section structure shown in Fig. 3, and is such as an identification card which is mounted with an identification medium having an optical character shown in Fig. 4 and 5. The polarized filter 806 has a function of selectively transmitting circularly polarized light having a predetermined rotation direction. Moreover, the polarized filter 806 has a structure which can be removed from a light path. The determining section 807 has a function of analyzing images photographed by the camera 805 and determining the authenticity. The memory 808 is provided for storing data which are referred to as the determining process at the determining section 807. The output section 809 is a data output means for showing a result of the determining process performed by the determining section 807. A display and a warning buzzer may be provided to the output section 809.

An operation example of an apparatus for determining authenticity is specifically explained hereinafter. An example of the process of determining authenticity of the identification medium shown in Fig. 3 is explained. Image data of the identification medium photographed by the camera 805 under conditions in which the polarized filter 806 was inserted into and was removed from the light path are stored to the memory 808 beforehand.

In the determination of the authenticity, an article for determining the authenticity 803 is set on the stage 802. Then, white light is irradiated from the device for irradiating visible light 804, and the identification medium without a figure on the article for determining the authenticity 803 is photographed by the camera 805. In this case, images are photographed in two conditions in which the polarized filter 806 is inserted to and is removed from the light path.

The two images photographed by the camera 805 and the image stored in the memory 808 are compared at the determining section 807. In this process of comparing, if the images are the same or differ with an acceptable error, the article is determined to be genuine. If the images are different, the article is determined to be counterfeit. The result of this determination is shown at the output section 809. According to this aspect, the image photographed by the camera 805 may be shown in the output section and a visual inspection may be used at the same time.

### INDUSTRIAL APPLICABILITY

The present invention may be applied to identification media for which authenticity is determined by visual inspection or image processing.

## Claims

1. An identification medium (100) provided with a layered structure comprising in that order:
a black adhesive light absorption layer (102);
an ink displaying layer (103) showing a figure in which a first display caused by an ink (104) including cholesteric liquid crystals and a second display caused by an ordinary (105) ink are combined, and
a cholesteric liquid crystal layer (106) formed with a hologram (107), wherein the first display and the second display are set to have the same color when the identification medium (100) is viewed from the front side of the cholesteric liquid crystal layer (106) at a view angle 0 deg, and
the cholesteric liquid crystal layer (106) is formed so as to selectively reflect light in a predetermined color that is different from the color of the first display when the identification medium (100) is viewed from the side of the cholesteric liquid crystal layer (106) at viewing angle 0 deg.

2. An article mounted with the identification medium (100) according to claim 1.

## Patentansprüche

1. Ein Identifikationsmedium (100), ausgestattet mit einer schichtweisen Struktur, aufweisend, in dieser Reihenfolge:
eine schwarze, lichtabsorbierende Klebstoffschicht (102);
eine Tinte anzeigende Schicht (103), die eine Figur zeigt, in welcher eine erste Anzeige, verursacht durch eine Tinte (104), die cholesterische Flüssigkristalle umfasst, und eine zweite Anzeige, verursacht durch eine gewöhnliche Tinte (105), kombiniert werden, und
eine cholesterische Flüssigkristallschicht (106), welche mit einem Hologramm (107) geformt ist, wobei die erste Anzeige und die zweite Anzeige zum Aufweisen derselben Farbe eingestellt sind, wenn das Identifikationsmedium (100) von der Vorderseite der cholesterischen Flüssigkristallschicht (106) mit einem Winkel von 0 Grad gezeigt ist, und
die cholesterische Flüssigkristallschicht (106) so geformt ist, dass sie selektiv Licht in einer vorbestimmten Farbe reflektiert, die von der Farbe der ersten Anzeige verschieden ist, wenn das Identifikationsmedium (100) von einer Seite der cholesterischen Flüssigkristallschicht (106) mit einem Winkel von 0 Grad gezeigt ist.

2. Ein Artikel, ausgestattet mit dem Identifikationsmedium (100) gemäß Anspruch 1.

## Revendications

1. Support (100) d'identification muni d'une structure stratifiée, comprenant dans cet ordre:
une couche (102) noire adhésive d'absorption de la lumière;
une couche (103) d'encre d'affichage représentant une figure, dans laquelle sont combinés un premier affichage donné par une encre (104) comprenant des cristaux liquides cholestériques et un deuxième affichage donné par une encre ordinaire (105), et
une couche (106) de cristal liquide cholestérique formée d'un hologramme (107), dans lequel le premier affichage et le deuxième affichage sont réglés de manière à avoir la même couleur lorsque le support (100) d'identification est vu du côté avant de la couche (106) de cristal liquide cholestérique sous un angle de vue de 0 degré, et
la couche (106) de cristal liquide cholestérique est formée de manière à réfléchir sélectivement la lumière dans une couleur déterminée à l'avance, qui est différente de la couleur du premier affichage lorsque le support (100) d'identification est vu par le côté de la couche (106) de cristal liquide cholestérique sous un angle de vue de 0 degré.

2. Article pourvu du support (100) d'identification suivant la revendication 1.
